# EUROPEAN PATENT APPLICATION

(11) **EP 3 469 944 A1**
(43) Date of publication of application: **17.04.2019**
(21) Application number: 17195747.5
(22) Date of filing: 10.10.2017
(51) Int. Cl.: A44C 11/00, B21L 11/00, B33Y 80/00, A44C 27/00

(54) **ORNAMENTAL CHAIN, CHAIN LINK AND MANUFACTURING PROCESS FOR MANUFACTURING AN ORNAMENTAL CHAIN**

(71) Applicant: VOJD GmbH, 12047 Berlin (DE)
(72) Inventor: Prigoana-Müller, Edgar, 12047 Berlin (DE); Vucheva, Hristiyana, 12047 Berlin (DE); Hartung, Christian, 12047 Berlin (DE)
(74) Representative: Bittner, Thomas L.

(57) **Abstract**

An ornamental chain comprising a first (1) and second (2) chain link is provided, wherein the first (1) and second (2) chain link each comprise a main section (3, 7) with a first end (4, 8) and a second end (5, 9) opposite the first end (4, 8); a hinge pin (6) is formed at the first end (4) of the first chain link (1), the hinge pin (6) being curved along its axis of extension; a hinge bore (10) is formed at the second end (9) of the second chain link (2), the hinge bore (10) being curved along its axis of extension; the hinge pin (6) of the first chain link (1) is arranged in the hinge bore (10) of the second chain link (2) such that the first chain link (1) is linked to the second chain link (2); the hinge pin (6) and / or the hinge bore (10) is formed with a diameter that varies along the extension of the hinge pin (6) and / or the hinge bore (10), the progression of the diameter of the hinge pin (6) and the progression of the diameter of the hinge bore (10) being adapted to each other such that a rotation of the curved hinge pin (6) is possible in the curved hinge bore (10); and the ornamental chain is manufactured in an additive manufacturing process such that the first (1) and the second (2) chain link are manufactured essentially at the same time and the hinge pin (6) of the first chain link (1) is provided in an arrangement inside the hinge bore (10) of the second chain link (2). Further, a chain link for an ornamental chain and a manufacturing process for manufacturing an ornamental chain are provided.

## Description

The invention relates to an ornamental chain, a chain link and a manufacturing process for manufacturing an ornamental chain.

### Background

For ornamental chains, it is known to link decorative chain links using hinges. The hinges have to provide the necessary stability and movability for wearing the chain, for example around the neck. Apart from the conflict between stability and movability that is also common for general hinges, the optical appearance plays a significant role for ornamental chains. For example, it is often desired for the hinge to not stand out against ornamental elements of the chain links.

Document DE 1 966 409 discloses a chain for carrying ornamental elements in which hollow carriage links for carrying ornamental elements are provided with slits. The slits are adapted to accommodate linkage elements during assembly for linking adjacent carriage links.

Document US 1,655,763 describes a chain with heart-shaped chain links that may be made oft thin flat stock. The chain links are linked by bending a head member of a chain link attached to a neck portion around a narrow end portion of an adjacent chain link.

In document DE 10 2011 102 278 A1, a chain link comprising a basic body and an extension is disclosed. The basic body comprises two opposite limbs which are connected to each other via a base section. The two limbs have respective oblong cutouts. The extension which is attached to the base section has two bolt sections which extend in opposite directions and the longitudinal axes of which run substantially perpendicularly to the longitudinal extent of the limbs. Furthermore, the invention relates to a chain having a plurality of chain links of this type. The ends of the two bolt sections which extend in opposite directions may be inserted into the oblong cutouts of the two limbs of the basic body of a second chain link from the inside to form a chain by linking several chain links.

With the introduction of additive manufacturing, new types of ornamental chains may be manufactured. Additive manufacturing, which may also be referred to as 3D printing, allows, for example, to produce shapes that were previously hard or impossible to manufacture due to undercuts. Also pre-assembled manufacturing of multi-part objects is possible. In additive manufacturing, an object is created by forming layers of material. Different methods of additive manufacturing are known in the art. For example, the material the object is to be formed of may be melted and deposited on a working surface layer by layer. In an alternative method, layers of an object are produced by depositing a continuous layer of powder on a working surface an then melting sections of the layer that is to form a layer of the object, for example using laser radiation.

### Summary

It is an object of the invention to provide an ornamental chain, a chain link and a manufacturing process for manufacturing an ornamental chain that allow for the pre-assembled production of an ornamental chain with improved hinges.

For solving the problem, an ornamental chain according to the independent claim 1 is proposed. Further, chain links according to the independent claims 11 and 13 as well as a manufacturing process for manufacturing an ornamental chain according to claim 15 are provided.

According to an aspect, an ornamental chain comprising a first and second chain link is provided. The first and second chain link each comprise a main section with a first end and a second end opposite the first end. A hinge pin is formed at the first end of the first chain link, the hinge pin being curved along its axis of extension. A hinge bore is formed at the second end of the second chain link, the hinge bore being curved along its axis of extension. The hinge pin of the first chain link is arranged in the hinge bore of the second chain link such that the first chain link is linked to the second chain link. The hinge pin and / or the hinge bore is formed with a diameter that varies along the extension of the hinge pin and / or the hinge bore, the progression of the diameter of the hinge pin and the progression of the diameter of the hinge bore being adapted to each other such that a rotation of the curved hinge pin is possible in the curved hinge bore. The ornamental chain is manufactured in an additive manufacturing process such that the first and the second chain link are manufactured essentially at the same time and the hinge pin of the first chain link is provided in an arrangement inside the hinge bore of the second chain link.

According to another aspect, a chain link for an ornamental chain is provided. The chain link comprises a main section with a first end and a second end opposite the first end, and a hinge pin formed at the first end, the hinge pin being curved along its axis of extension. The hinge pin is formed with a diameter that varies along the extension of the hinge pin, the progression of the diameter of the hinge pin being adapted such that a rotation of the curved hinge pin in a curved hinge bore is possible. The chain link is manufactured in an additive manufacturing process.

According to a further aspect, a chain link for an ornamental chain is provided. The chain link comprises a main section with a first end and a second end opposite the first end, and a hinge bore formed at the second end, the hinge bore being curved along its axis of extension. The hinge bore is formed with a diameter that varies along the extension of the hinge bore, the progression of the diameter of the hinge bore being adapted such that a rotation of a curved hinge pin in the curved hinge bore is possible. The chain link is manufactured in an additive manufacturing process.

According to a further aspect, a manufacturing process for manufacturing an ornamental chain is provided. The manufacturing process comprises additive manufacturing of a first chain link, comprising a main section with a first end and a second end opposite the first end, and a hinge pin at the first end of the first chain link, the hinge pin being curved along its axis of extension. The manufacturing process further comprises additive manufacturing of a second chain link, comprising a main section with a first end and a second end opposite the first end, and a hinge bore at the second end of the second chain link, the hinge bore being curved along its axis of extension. Additive manufacturing of the first chain link and additive manufacturing of the second chain link comprises additive manufacturing of the first and the second chain link essentially at the same time. Additive manufacturing of the first chain link comprises manufacturing of the hinge pin of the first chain link in the hinge bore of the second chain link such that the first chain link is linked to the second chain link. Additive manufacturing of the first chain link and / or additive manufacturing of the second chain link comprises additive manufacturing of the curved hinge pin and / or additive manufacturing of the curved hinge bore with a diameter that varies along the extension of the hinge pin and / or the hinge bore. Additive manufacturing of the curved hinge pin and additive manufacturing of the curved hinge bore comprises adapting the progression of the diameter of the hinge pin and the progression of the diameter of the hinge bore to each other such that a rotation of the curved hinge pin is possible in the curved hinge bore.

Any additive manufacturing process, known in the art as such, may be employed in manufacturing the ornamental chain.

The hinge pin and / or the hinge bore may be provided with a circular cross section.

The hinge pin and / or the hinge bore may be curved along their entire length. Alternatively, the hinge pin and / or the hinge bore may be curved only in one or more sections thereof. The curvature of the hinge pin and / or the curvature of the hinge bore may be uniform. Alternatively the curvature of the hinge pin and / or the curvature of the hinge bore may not be uniform. For example, the respective curvature may follow a function. Alternatively or additionally, the respective curvature may follow the shape of the respective main section of the first chain link and / or the second chain link. For example, the curvature of the hinge pin and / or the curvature of the hinge bore may follow the shape of the first chain link and / or the second chain link, respectively, to optically underline an overall outer shape of the main section of the first chain link and / or the second chain link.

The curvature of the hinge pin may correspond to the curvature of the hinge bore. Alternatively, the curvature of the hinge pin may correspond only partially, for example in sections, to the curvature of the hinge bore.

The hinge pin and the hinge bore may be formed with main diameters that are adapted to each other to allow a hinge rotation essentially free of play and a section of the hinge pin may be provided with a diameter that is less than the main diameter of the hinge pin to allow a rotation of the curved hinge pin in the curved hinge bore. In this way, the diameter of the hinge pine may be adapted to the curvatures of the hinge pin and the hinge bore.

For example, along a section of the hinge pin, the hinge pin may have a diameter that is only slightly less than the diameter of the hinge bore which may be formed with a uniform diameter. The hinge pin may have a reduced diameter in other sections to allow for a rotation of the first and second chain links around the hinge formed by the hinge pin and the hinge bore which may otherwise be inhibited by the curvature of the hinge pin and the hinge bore.

The hinge pin may have more than one section in which the diameter of the hinge pin is only slightly less than the diameter of the hinge bore. The hinge pin may have more than one section in which the diameter of the hinge pin is reduced.

The hinge pin and the hinge bore may be formed with main diameters that are adapted to each other to allow a hinge rotation essentially free of play and a section of the hinge bore may be provided with a diameter that is greater than the main diameter of the hinge bore to allow a rotation of the curved hinge pin in the curved hinge bore. In this way, the diameter of the hinge bore may be adapted to the curvatures of the hinge pin and the hinge bore.

For example, along a section of the hinge bore, the hinge bore may have a diameter that is only slightly greater than the diameter of the hinge pin which may be formed with a uniform diameter. The hinge bore may have an increased diameter in other sections to allow for a rotation of the first and second chain links around the hinge formed by the hinge pin and the hinge bore which may otherwise be inhibited by the curvature of the hinge pin and the hinge bore.

The hinge bore may have more than one section in which the diameter of the hinge bore is only slightly greater than the diameter of the hinge pin. The hinge bore may have more than one section in which the diameter of the hinge pin is increased.

The hinge pin and the hinge bore may be formed with main diameters that are adapted to each other to allow a hinge rotation essentially free of play and a section of the hinge pin may be provided with a diameter that is less than the main diameter of the hinge pin while a section of the hinge bore may be provided with a diameter that is greater than the main diameter of the hinge bore to allow a rotation of the curved hinge pin in the curved hinge bore. The hinge pin, the hinge bore or both may be provided with more than one section in which the diameter is less than or greater than the main diameter, respectively. Sections with a reduced diameter and sections with an increased diameter may overlap, partially or completely.

The diameter of the hinge pin and / or the diameter of the hinge bore may change abruptly, for example at the edge of a section. Alternatively, the diameter of the hinge pin and / or the diameter of the hinge bore may change gradually. For example, the change of diameter of the hinge pin and / or the hinge bore may follow a function.

A uniform circumferential thickening may be formed on the hinge pin of the first chain link and a uniform circumferential recess may be formed in a recess section of the hinge bore of the second chain link. The diameter of the recess in the recess section may be greater than the diameter of at least one respective further section of the hinge bore in each direction along the extension of the hinge bore. Two side walls may be formed in the recess. The diameter of the recess in the recess section may be greater than the diameter of the thickening on the hinge pin. The uniform circumferential thickening of the hinge pin of the first chain link may be arranged in the recess in the recess section of the hinge bore of the second chain link such that a movement of the second chain link along the extension of the hinge pin is limited in both directions by the uniform circumferential thickening coming into contact with one of the side walls of the recess. Further, the ornamental chain may be manufactured in an additive manufacturing process such that the first and the second chain link are manufactured essentially at the same time and the uniform circumferential thickening of the hinge pin of the first chain link is provided in an arrangement in the recess in the recess section of the hinge bore of the second chain link.

The arrangement of the circumferential thickening in the recess may also be referred to as an interlocked disc barrier. The interlocked disc barrier may limit the movement of the first and second chain links with respect to each other.

A distance between the side walls of the recess in the recess section of the hinge bore of the second chain link may be slightly greater than a width of the uniform circumferential thickening of the hinge pin of the first chain link such that a movement along the extension of the hinge pin between the first chain link and the second chain link is essentially prevented. Alternatively or additionally, a diameter of the recess in the recess section of the hinge bore of the second chain link may be slightly larger than a diameter of the uniform circumferential thickening of the hinge pin of the first chain link such that a movement in radial direction of the hinge pin between the first chain link and the second chain link is essentially prevented.

By essentially preventing movement between the first chain link and the second chain link in one or more directions, movement between the first chain link and the second chain link may be restricted to certain desired types of movement, allowing for wearing the ornamental chain while maintaining a desired optical appearance of the chain.

Providing the uniform circumferential thickening of the hinge pin of the first chain link in an arrangement in the recess in the recess section of the hinge bore of the second chain link in an additive manufacturing process may allow for an interlocked disc barrier with a uniform external appearance. Uniform external appearance of the interlocked disc barrier may improve optical appearance of the ornamental chain. For example, due to uniform external appearance of the interlocked disc barrier, the hinge may not stand out against ornamental elements of the ornamental chain.

The hinge pin of the first chain link may extend along a main plane or parallel to a main plane of the first chain link and the hinge bore of the second chain link may extend, at least in sections, normal to a main plane of the second chain link.

The main planes of the first chain link and the second chain link may be defined by the respective plane which a viewer looks upon when frontally viewing the ornamental element or elements of the first chain link or the second chain link, respectively. By the hinge pin of the first chain link extending along the main plane or parallel to the main plane of the first chain link and the hinge bore of the second chain link extending normal to a main plane of the second chain link, at least in sections, the main plane of the first chain link and the main plane of the second chain link may be perpendicular to each other in the ornamental chain. Thereby, the ornamental element or elements of the first chain link may face in a direction perpendicular to the direction the ornamental element or elements of the second chain link is / are facing.

The main section of the first chain link and the main section of the second chain link may each be formed in the shape of a letter or a number. The letter or number shape may be the main ornamental element of the first and / or the second chain link, respectively. The hinge pin and / or the hinge bore may be formed such that they do not or only in a limited amount deviate from the overall letter or number shape of the first chain link and / or the second chain link.

The curvature of the hinge pin and / or the curvature of the hinge bore may follow the letter or number shape of the main section of the first chain link and / or the main section of the second chain link. The variation of the diameter of the hinge pin and / or the hinge bore may allow for the curvature of the hinge pin and / or the curvature of the hinge bore to follow the shape of the main section of the first chain link and / or the second chain link, for example a letter or number shape, while allowing a rotation of the curved hinge pin in the curved hinge bore.

Alternatively or additionally, an interlocked disc barrier may formed with the hinge pin and the hinge bore and the interlocked disc barrier may have a uniform outer shape that may be integrated into the shape of the main section of the first chain link and / or the second chain link. Integrating the outer shape of an interlocked disc barrier into the shape of the main section of the first chain link and / or the second chain link may comprise forming the interlocked disc barrier with an outer shape matching the shape of the main section and / or forming the interlocked disc barrier with an outer shape being less noticeable to a viewer than the shape of the main section. A uniform outer shape of the interlocked disc barrier that may be integrated into the shape of the main section of the first chain link and / or the second chain link may be achieved by forming the functional elements of the interlocked disc barrier, such as a uniform circumferential thickening on the hinge pin and a uniform circumferential recess in a recess section of the hinge bore, in an additive manufacturing process that allows the functional elements of the interlocked disc barrier to be formed as integral parts and / or independent of the outer shape of the interlocked disc barrier.

The first and / or the second end of the first chain link and / or the second chain link may be formed as integral but visually separate parts of the respective main section. For example the first end and / or the second end of the first chain link and / or the second chain link may be formed in a less noticeably perceived manner than a decorative shape of the respective main section. The first end and / or the second end may for example be formed with small structures compared to a decorative shape of the main section.

As an alternative to letters or number or additionally, the main section of the first chain link and the main section of the second chain link may each be formed in the shape of a symbol or a figure. The embodiments described above with regard to letter or number shapes apply accordingly to symbol or figure shapes.

A further hinge bore may be formed at the second end of the first chain link and a further hinge pin may be formed at the first end of the second chain link. Additionally the ornamental chain may comprise a third chain link, comprising a main section with a first end and a second end opposite the first end, and a fourth chain link, comprising a main section with a first end and a second end opposite the first end. A further hinge pin may be formed at the first end of the third chain link and a further hinge bore may be formed at the second end of the fourth chain link. The hinge pin of the third chain link may be arranged in the hinge bore of the first chain link such that the third chain link is linked to the first chain link and the hinge pin of the second chain link may be arranged in the hinge bore of the fourth chain link such that the second chain link is linked to the fourth chain link. The ornamental chain may be manufactured in an additive manufacturing process such that all chain links are manufactured essentially at the same time and the hinge pin of the third chain link is provided in an arrangement inside the hinge bore of the first chain link and the hinge pin of the second chain link is provided in an arrangement inside the hinge bore of the fourth chain link.

In this manner, any number of further chain links may be formed. The ornamental chain may thus comprise any number of chain links each comprising a main section with a first end and a second end opposite the first end, a hinge pin at the first end and a hinge bore at the second end. All of a series of any number interlinked chain links of the ornamental chain may comprise a main section with a first end and a second end opposite the first end, a hinge pin at the first end and a hinge bore at the second end. Alternatively, all but the first and the last chain link of a series of any number interlinked chain links of the ornamental chain may comprise a main section with a first end and a second end opposite the first end, a hinge pin at the first end and a hinge bore at the second end. The ornamental chain may comprise additional elements. For example the ornamental chain may comprise a closing mechanism to close the chain around a body part around which it is worn.

The embodiments described above with reference to the first and / or the second chain link may apply accordingly to each or any of any number of additional chain links in the ornamental chain. For example, the main section of each of the chain links of the ornamental chain may be formed in the shape of a letter or a number and the ornamental chain may form a chain of letters and / or numbers forming any desired word, message or the like.

The ornamental chain may be made of any material suitable for additive manufacturing. For example, the ornamental chain may be made of a polyamide ceramics mixture.

The chain link for an ornamental chain with a hinge pin formed at the first end, the hinge pin being curved along its axis of extension, may comprise a hinge bore formed at the second end.

The chain link for an ornamental chain with a hinge bore formed at the second end, the hinge bore being curved along its axis of extension, may comprise a hinge bore formed at the second end.

In an alternative embodiment, an ornamental chain comprising a first and a second chain link may be provided, wherein the first and second chain link each comprise a main section with a first end and a second end opposite the first end; a hinge pin is formed at the first end of the first chain link, a uniform circumferential thickening being formed on the hinge pin of the first chain link; a hinge bore is formed at the second end of the second chain link, a uniform circumferential recess being formed in a recess section of the hinge bore; a diameter of the recess in the recess section is greater than the diameter of at least one respective further section of the hinge bore in each direction along the extension of the hinge bore; two side walls are formed in the recess; the diameter of the recess in the recess section is greater than the diameter of the thickening on the hinge pin; the hinge pin of the first chain link is arranged in the hinge bore of the second chain link such that the first chain link is linked to the second chain link and the uniform circumferential thickening of the hinge pin of the first chain link is arranged in the recess in the recess section of the hinge bore of the second chain link such that a movement of the second chain link along the extension of the hinge pin is limited in both directions by the uniform circumferential thickening coming into contact with one of the side walls of the recess; and the ornamental chain is manufactured in an additive manufacturing process such that the first and the second chain link are manufactured essentially at the same time and the hinge pin of the first chain link is provided in an arrangement inside the hinge bore of the second chain link and the uniform circumferential thickening of the hinge pin of the first chain link is provided in an arrangement in the recess in the recess section of the hinge bore of the second chain link.

In such an embodiment, an ornamental chain with an interlocked disc barrier may be provided in which the hinge pin and the hinge bore are not curved. With regard to such embodiment, the alternative embodiments described above with regard to an ornamental chain in which the hinge pin and the hinge bore are curved may apply, *mutatis mutandis.*

With regard to the chain links and the manufacturing process for manufacturing an ornamental chain, the alternative embodiments described above may apply accordingly.

### Description of further embodiments

Following, embodiments, by way of example, are described with reference to figures. In the figures show:
- Fig. 1A: a schematic representation of an ornamental chain;
- Fig. 1B: a representation of a different perspective of the ornamental chain from Fig. 1A;
- Fig. 2A: a detailed view of the ornamental chain from Fig. 1A;
- Fig. 2B: a detailed view of the ornamental chain from Fig. 1B;
- Fig. 3A: a schematic representation of a different ornamental chain;
- Fig. 3B: a different view of the ornamental chain of Fig. 3A;
- Fig. 3C: a further view of the ornamental chain of Fig. 3A; and
- Fig. 4: a detailed view of an ornamental chain.

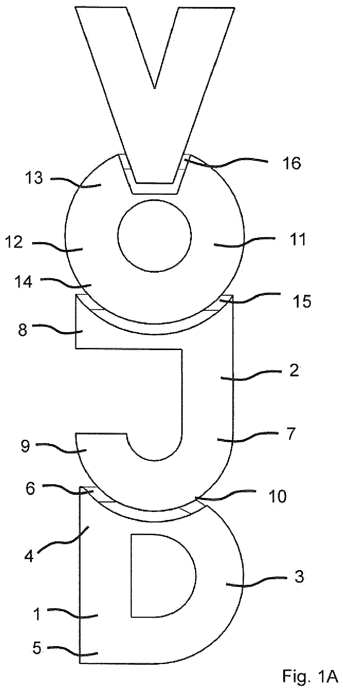

Fig. 1A shows a schematic representation of an ornamental chain. The chain comprises a first chain link 1 and a second chain link 2. The first chain link 1 has a main section 3 which is shaped like a letter "D". The main section 3 has a first end 4 and a second end 5 opposite the first end 4. At the first end 4, the first chain link 1 has a hinge pin 6. The hinge pin 6 is curved to follow the shape of the main section 3 of the first chain link 1 at the first end 4.

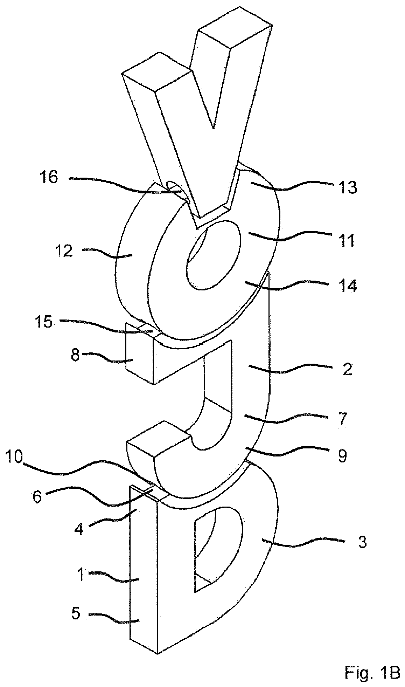

The second chain link 2 has a main section 7 shaped like a letter "J". The main section 7 of second chain link 2 has a first end 8 and a second end 9 opposite the first end 8. A hinge bore 10 is formed at the second end 9 of the second chain link 2. The hinge bore 10 may be more easily observed in Fig. 1B which is a view of the ornamental chain of Fig. 1A from a different perspective. As the hinge pin 6, the hinge bore 10 is curved.

The ornamental chain is manufactured in an additive manufacturing process in which the ornamental chain is formed layer by layer. Each layer contains cross sections of all chain links of the ornamental chain such that all chain links are essentially formed at the same time in the additive manufacturing process. In the additive manufacturing process, curved hinge pin 6 is formed inside curved hinge bore 10 such that first chain link 1 and second chain link 2 are formed interlinked with each other forming a hinge already during manufacturing. Therefore, no further assembly is required after the additive manufacturing process is complete. As a consequence, the shapes of the hinge pin 6 and the hinge bore 10 may be defined without regard for the possibility of assembly after manufacturing.

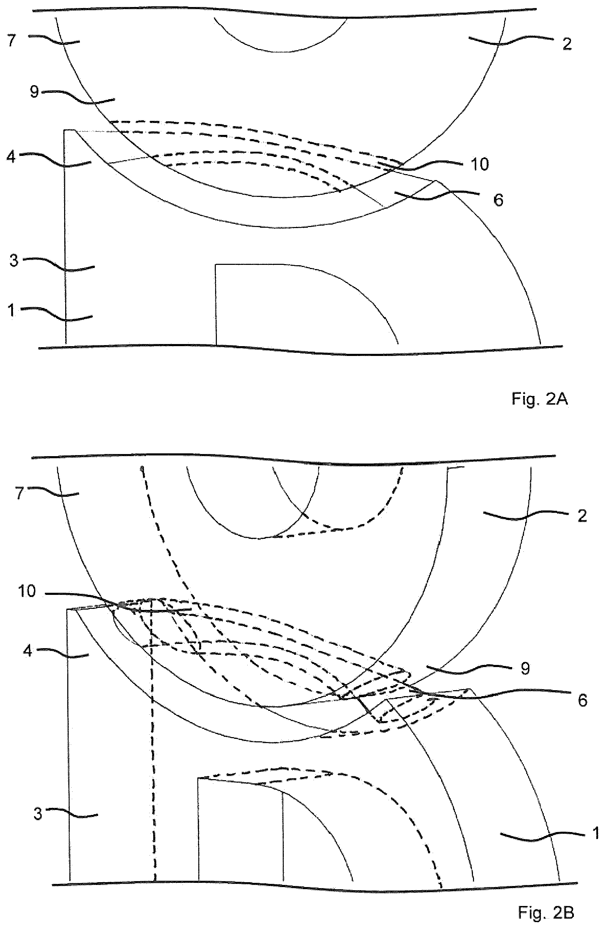

Fig. 2A and 2B show detailed views of the ornamental chain from Fig. 1A and 1B. In Fig. 2A and 2B, the shape of the curved hinge pin 6 and the curved hinge bore 10 inside the first chain link 1 and the second chain link 2 are shown using broken lines. The curvatures of the hinge pin 6 and the hinge bore 10 are adapted to each other such that the hinge bore 10 accommodates the hinge pin 6. Further, a main diameter of the hinge bore 10 is only slightly greater than a main diameter of the hinge pin 6 such as to only allow a limited radial play of the hinge pin 6 in the hinge bore 10. In order to allow a rotation of the hinge pin 6 in the hinge bore 10, which may otherwise be inhibited by the curvature of the hinge pin 6 and the hinge bore 10, the respective diameter of the hinge pin 6 and the hinge bore 10 is not constant along the hinge pin 6 and the hinge bore 10, respectively. The diameter of the hinge pin 6 decreases towards a middle section of the hinge pin 6. The diameter of the hinge bore 10 is adapted to the diameter of the hinge pin 6 and decreases accordingly.

At both ends of the hinge pin 6 connected to the main section 3 of the first chain link 1, the diameter of the hinge pin 6 is the main diameter of the hinge pin 6. At the outer ends of the hinge bore 10, i.e. at the surface of the second end 9 of the second chain link 2, the diameter of the hinge bore 10 is the main diameter of the hinge bore 10. The hinge bore 10 may rotate around the hinge pin 6, resulting in a rotational movement between the first chain link 1 and the second chain link 2 along the first end 4 (the upper end in Fig. 1A and 1B) of the first chain link 1 and the second end 9 (the lower end in Fig. 1A and 1B) of the second chain link 2.

In an alternative embodiment (not shown), the hinge pin 6 may be the main diameter of the hinge pin 6 at one end of the hinge pin 6 connected to the main section 3 of the first chain link 1 and the diameter of the hinge bore 10 may be the main diameter of the hinge bore 10 at a corresponding outer end of the hinge bore 10 at the surface of the second end 9 of the second chain link 2. The diameter of the hinge pin 6 may be smaller at a section close to the end of the hinge pin 6 opposing the end at which the hinge pin 6 is the main diameter of the hinge pin 6. The diameter of the hinge bore 10 may be greater in a section of the hinge bore 10 corresponding to the section of the hinge pin 6 with a reduced diameter.

The ornamental chain of Fig. 1A and 1B comprises a further chain link 11 with a main section 12 in the shape of a letter "O" comprising a first end 13 and a second end 14. A hinge bore is formed at the second end 15 of the further link 12 and accommodates a hinge pin 15 formed at the first end 8 of the second chain link 2. Thereby, further chain link 11 is hingedly connected to the second chain link 2. The further chain link 11 comprises a hinge pin 16, formed at the first end 13 thereof, by which the further chain link 11 may be linked to additional chain links. In this manner the chain link of Fig. 1A and 1B forms a sequence of letters "VOJD" by comprising a total number of four chain links.

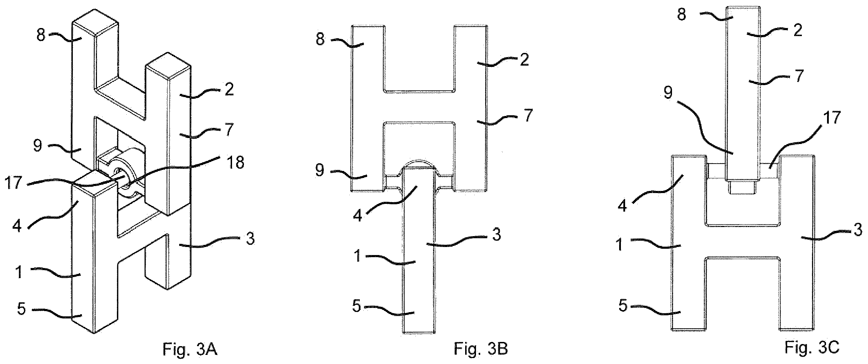

Fig. 3A, 3B and 3C show different perspectives of an ornamental chain comprising a first chain link 1 and a second chain link 2. The first chain link 1 comprises a main section 3 with a first end 4 and a second end 5. The second chain link 2 comprises a main section 7 with a first end 8 and a second end 9. Both the main section 3 of the first chain link 1 and the main section 7 of the second chain link 2 are in the shape of a letter "H". Both the main section 3 of the first chain link 1 and the main section 7 of the second chain link 2 define a main plane of the first chain link 1 and the second chain link 2, respectively, both main planes being the plane in which the respective letter "H" is readable. The first chain link 1 has a hinge pin 17 formed at the first end 4 thereof. The hinge pin 17 lies in the main plane of the first chain link 1. The second chain link 2 has a hinge bore 18 formed at a second end 9 thereof. The hinge bore 18 extends normal to the main plane of the second chain link 2.

The hinge bore 18 at the second end 9 of the second chain link 2 accommodates the hinge pin 17 at the first end 4 of the first chain link 1. The extension of the hinge pin 17 in the main plane of the first chain link 1 and the extension of the hinge bore 18 normal to the main plane of the second chain link 2 thereby lead to a perpendicular arrangement of the main planes of the first 1 and the second 2 chain links, as shown in Fig. 3A, 3B and 3C.

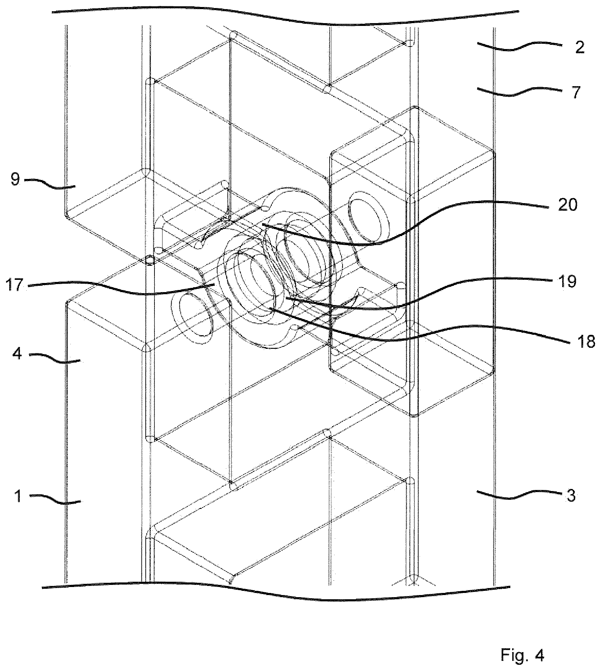

Fig. 4 shows an ornamental chain similar to the ornamental chain shown in Fig. 3A, 3B and 3C. On the hinge pin 17 at the first end 4 of the first chain link 1 of the ornamental chain shown in Fig. 4, a uniform circumferential thickening 19 is formed. Uniform circumferential thickening 19 is arranged inside a uniform circumferential recess 20 formed in the hinge bore 18 at the second end 9 of the second chain link 2.

The ornamental chain is manufactured in an additive manufacturing process in which hinge pin 17 is formed inside hinge bore 18 and uniform circumferential thickening 19 is formed inside uniform circumferential recess 20 such that the first chain link 1 and the second chain link 2 are formed interlinked with each other forming a hinge already during manufacturing.

When the first chain link 1 and the second chain link 2 are moved relative to each other along the axes of the hinge pin 17 and the hinge bore 18, this lateral movement is limited by the left side of the circumferential thickening 19 coming into contact with the left side of the uniform circumferential recess 20 or the right side of the circumferential thickening 19 coming into contact with the right side of the uniform circumferential recess 20. By manufacturing the width of the circumferential thickening 19, i.e. the distance between the left and right sides the of the circumferential thickening 19, and the width of the uniform circumferential recess 20, i.e. the distance between the left and right sides of the uniform circumferential recess 20, accordingly, the lateral relative movement of the first chain link 1 and the second chain link 2 along the axes of the hinge pin 17 and the hinge bore 18 may be limited as desired.

Similarly, a relative movement of the first chain link 1 and the second chain link 2 radial to the axes of the hinge pin 17 and the hinge bore 18 may be limited by adjusting a difference in diameter between the hinge pin 17 and the hinge bore 18 and / or between the circumferential thickening 19 and the circumferential recess 20.

The features disclosed in this specification, the figures and / or the claims may be material for the realization of various embodiments, taken in isolation or in various combinations thereof.

## Claims

1. Ornamental chain comprising a first (1) and second (2) chain link, wherein
- the first (1) and second (2) chain link each comprise a main section (3, 7) with a first end (4, 8) and a second end (5, 9) opposite the first end (4, 8);
- a hinge pin (6) is formed at the first end (4) of the first chain link (1), the hinge pin (6) being curved along its axis of extension;
- a hinge bore (10) is formed at the second end (9) of the second chain link (2), the hinge bore (10) being curved along its axis of extension;
- the hinge pin (6) of the first chain link (1) is arranged in the hinge bore (10) of the second chain link (2) such that the first chain link (1) is linked to the second chain link (2);
- the hinge pin (6) and / or the hinge bore (10) is formed with a diameter that varies along the extension of the hinge pin (6) and / or the hinge bore (10), the progression of the diameter of the hinge pin (6) and the progression of the diameter of the hinge bore (10) being adapted to each other such that a rotation of the curved hinge pin (6) is possible in the curved hinge bore (10); and
- the ornamental chain is manufactured in an additive manufacturing process such that the first (1) and the second (2) chain link are manufactured essentially at the same time and the hinge pin (6) of the first chain link (1) is provided in an arrangement inside the hinge bore (10) of the second chain link (2).

2. Ornamental chain according to claim 1, **characterized in that** the hinge pin (6) and the hinge bore (10) are formed with main diameters that are adapted to each other to allow a hinge rotation essentially free of play and a section of the hinge pin (6) is provided with a diameter that is less than the main diameter of the hinge pin (6) to allow a rotation of the curved hinge pin (6) in the curved hinge bore (10).

3. Ornamental chain according to claim 1 or 2, **characterized in that** the hinge pin (6) and the hinge bore (10) are formed with main diameters that are adapted to each other to allow a hinge rotation essentially free of play and a section of the hinge bore (10) is provided with a diameter that is greater than the main diameter of the hinge bore (10) to allow a rotation of the curved hinge pin (6) in the curved hinge bore (10).

4. Ornamental chain according to at least one of the preceding claims, **characterized in that**
- a uniform circumferential thickening (19) is formed on the hinge pin (6) of the first chain link (1); and
- a uniform circumferential recess (20) is formed in a recess section of the hinge bore (10) of the second chain link (2);
wherein
- a diameter of the recess (20) in the recess section is greater than the diameter of at least one respective further section of the hinge bore (10) in each direction along the extension of the hinge bore (10);
- two side walls are formed in the recess (20);
- the diameter of the recess (20) in the recess section is greater than the diameter of the thickening (19) on the hinge pin (6);
- the uniform circumferential thickening (19) of the hinge pin (6) of the first chain link (1) is arranged in the recess (20) in the recess section of the hinge bore (10) of the second chain link (2) such that a movement of the second chain link (2) along the extension of the hinge pin (6) is limited in both directions by the uniform circumferential thickening (19) coming into contact with one of the side walls of the recess (20); and
- the ornamental chain is manufactured in an additive manufacturing process such that the first (1) and the second (2) chain link are manufactured essentially at the same time and the uniform circumferential thickening (19) of the hinge pin (6) of the first chain link (1) is provided in an arrangement in the recess (20) in the recess section of the hinge bore (10) of the second chain link (2).

5. Ornamental chain according to claim 4, **characterized in that** a distance between the side walls of the recess (20) in the recess section of the hinge bore (10) of the second chain link (2) is slightly greater than a width of the uniform circumferential thickening (19) of the hinge pin (6) of the first chain link (1) such that a movement along the extension of the hinge pin (6) between the first chain link (1) and the second chain link (2) is essentially prevented.

6. Ornamental chain according to claim 4 or 5, **characterized in that** a diameter of the recess (20) in the recess section of the hinge bore (10) of the second chain link (2) is slightly larger than a diameter of the uniform circumferential thickening (19) of the hinge pin (6) of the first chain link (1) such that a movement in radial direction of the hinge pin (6) between the first chain link (1) and the second chain link (2) is essentially prevented.

7. Ornamental chain according to at least one of the preceding claims, **characterized in that**
- the hinge pin (6) of the first chain (1) link extends along a main plane or parallel to a main plane of the first chain link (1); and
- the hinge bore (10) of the second chain link (2) extends, at least in sections, normal to a main plane of the second chain link (2).

8. Ornamental chain according to at least one of the preceding claims, **characterized in that** the main section (3) of the first chain link (1) and the main section (7) of the second chain link (2) are each formed in the shape of a letter or a number.

9. Ornamental chain according to at least one of the preceding claims, **characterized in that**
- a further hinge bore is formed at the second end (5) of the first chain link (1); and
- a further hinge pin is formed at the first end (8) of the second chain link (2).

10. Ornamental chain according to claim 9, **characterized by**
- a third chain link comprising a main section with a first end and a second end opposite the first end; and
- a fourth chain link comprising a main section with a first end and a second end opposite the first end;
wherein
- a further hinge pin is formed at the first end of the third chain link;
- a further hinge bore is formed at the second end of the fourth chain link;
- the hinge pin of the third chain link is arranged in the hinge bore of the first chain link (1) such that the third chain link is linked to the first chain link (1);
- the hinge pin of the second chain link (2) is arranged in the hinge bore of the fourth chain link such that the second chain link (2) is linked to the fourth chain link;
- the ornamental chain is manufactured in an additive manufacturing process such that all chain links are manufactured essentially at the same time and the hinge pin of the third chain link is provided in an arrangement inside the hinge bore of the first chain link (1) and the hinge pin of the second chain link (2) is provided in an arrangement inside the hinge bore of the fourth chain link.

11. Chain link (1) for an ornamental chain, comprising
- a main section (3) with a first end (4) and a second end (5) opposite the first end (4); and
- a hinge pin (6) formed at the first end (4), the hinge pin (6) being curved along its axis of extension;
wherein
- the hinge pin (6) is formed with a diameter that varies along the extension of the hinge pin (6), the progression of the diameter of the hinge pin (6) being adapted such that a rotation of the curved hinge pin (6) in a curved hinge bore is possible; and
- the chain link (1) is manufactured in an additive manufacturing process.

12. Chain link (1) according to claim 11, **characterized by** a hinge bore formed at the second end (5).

13. Chain link (2) for an ornamental chain, comprising
- a main section (7) with a first end (8) and a second end (9) opposite the first end (8); and
- a hinge bore (10) formed at the second end (9), the hinge bore (10) being curved along its axis of extension;
wherein
- the hinge bore (10) is formed with a diameter that varies along the extension of the hinge bore (10), the progression of the diameter of the hinge bore (10) being adapted such that a rotation of a curved hinge pin in the curved hinge bore (10) is possible; and
- the chain link (2) is manufactured in an additive manufacturing process.

14. Chain link (2) according to claim 11, **characterized by** a hinge pin formed at the first end (8).

15. Manufacturing process for manufacturing an ornamental chain, comprising:
- additive manufacturing of a first chain link (1), comprising
- a main section (3) with a first end (4) and a second end (5) opposite the first end (4); and
- a hinge pin (6) at the first end (4) of the first chain link (1), the hinge pin (6) being curved along its axis of extension; and
- additive manufacturing of a second chain link (2), comprising
- a main section (7) with a first end (8) and a second end (9) opposite the first end (8); and
- a hinge bore (10) at the second end (9) of the second chain link (2), the hinge bore (10) being curved along its axis of extension;
wherein
- additive manufacturing of the first chain link (1) and additive manufacturing of the second chain link (2) comprises additive manufacturing of the first (1) and the second (2) chain link essentially at the same time;
- additive manufacturing of the first chain link (1) comprises manufacturing of the hinge pin (6) of the first chain link (1) in the hinge bore (10) of the second chain link (2) such that the first chain link (1) is linked to the second chain link (2);
- additive manufacturing of the first chain link (1) and / or additive manufacturing of the second chain link (2) comprises additive manufacturing of the curved hinge pin (6) and / or additive manufacturing of the curved hinge bore (10) with a diameter that varies along the extension of the hinge pin (6) and / or the hinge bore (10); and
- additive manufacturing of the curved hinge pin (6) and additive manufacturing of the curved hinge bore (10) comprises adapting the progression of the diameter of the hinge pin (6) and the progression of the diameter of the hinge bore (10) to each other such that a rotation of the curved hinge pin (6) is possible in the curved hinge bore (10).
